# EUROPEAN PATENT SPECIFICATION

(11) **EP 2 757 242 B1**
(45) Date of publication and mention of the grant of the patent: **25.04.2018**
(21) Application number: 13290013.5
(22) Date of filing: 18.01.2013
(51) Int. Cl.: F02K 9/52

(54) **Injector element for rocket engines**
Injektorelement für Raketentriebwerke
Élément d'injecteur pour moteurs-fusées

(43) Date of publication of application: 23.07.2014
(73) Proprietor: ArianeGroup GmbH, 82024 Taufkirchen (DE)
(72) Inventor: De Bonn, Olivier, 85521 Ottobrunn (DE); Mäding, Chris, 85716 Unterschleissheim (DE); Obermaier, Georg, 83071 Stephanskirchen (DE)
(74) Representative: Schicker, Silvia

(56) References cited:
- US-A- 3 464 633
- US-A- 5 456 065
- US-A- 5 603 213
- US-A1- 2001 025 483

## Description

The invention pertains to an injector element according to the appended claims. Coaxial injector elements for rocket drives are known in different variants. In the case of hypergolic propellants, the two components meet one another in the liquid form after the injection and react spontaneously with one another on contact. It is therefore important to provide for the largest possible reacting surfaces, i.e., to adequately prepare the two components separately from one another, and then to unite them without great differences in velocity.
A coaxial injector element, for example, is known from US 5,456,065 corresponding to DE 43 05 154 C1. The injector element includes an at least extensively rotationally symmetrically central body for the oxidant. The central body includes a flow channel with a twisting insert and with a cross sectional contraction leading to an outlet with a sharp opening edge. A sleeve is provided concentrically surrounding the central body and delimiting an annular flow channel for the fuel. The annular flow channel has lateral inlet openings and an outlet with a circular cylindrical inner contour with a propellant opening to the combustion chamber having a sharp opening edge. The oxidant flow channel has a circular cylindrical internal contour at least in an area of the outlet opening. The oxidant opening edge and the propellant opening edge are both located in a plane of a front surface of the combustion chamber. A flow divider is provided for dividing the fuel flow into 5 to 20 individual flow portions of equal flow rate and cross section at equally spaced locations. The flow divider is arranged in the fuel flow channel between the sleeve forming a fuel opening and the central body.

US 5,704,551 corresponding to DE 195 15 879 A1 describes an injector element in bicoaxial construction, i.e. the injector element comprises an inner element with a first outlet opening to form a conical oxidant jet and an outer element arranged coaxially thereto with further second outlet openings in the form of passage channels to form fuel jets.

US 3,464,633 discloses a multiple fluid shear valve in bicoaxial construction, having a central body member, and a surrounding member concentrically surrounding the central body member. A number of circumferentially spaced radial slots having a circular extension define intervening standoff teeth. The slots collectively constitute the valve outlet.

US 5,603,213 discloses an injector provided with a body about an axis to which there is coaxially connected at least one annular injection element comprising a central annular injection slit surrounded by two other annular injection slits. The central annular slit is fed with a second propellant which enters at the top of the injection element level with the central slit and the other annular slits are fed with a first propellant which enters at the base of the injection element, on either side of the central slit, and passes through an annular homogenization cavity from which it flows towards the annular slits surrounding the central injection slit. The second propellant is supplied to the injection elements via horizontal passages uniformly spaced around the central bore and emerging into the annular cavity to feed the second injection element.

It is an object of the present invention to provide an alternative injector element which enables an improved combustion efficiency. It is a further embodiment of the invention to provide an improved rocket drive.
These objects are solved by an injector element according to claim 1 and a rocket drive according to claim 7. Preferred embodiments are set out in the dependent claims.
According to the invention, an injector element of coaxial design is provided for a rocket drive for operation with a first and a second propellant, comprising a central body, a sleeve and a flow splitter. The central body comprises a flow channel with an outlet, the central body generating a conical drop distribution at the outlet forming a fuel cone, wherein the first propellant, normally an oxidant, is provided in the central body. The sleeve concentrically surrounds the central body to form an annular flow channel for the second propellant, normally fuel. The flow splitter is arranged between the central body and the sleeve for splitting the second propellant into a plurality of individual flows. The flow splitter includes a given number of passage channels which are distributed around the central body, each of the passage channels for generating a fine propellant jet. The passage channels are slots wherein the long sides of the slots are inclined with regard to their radial extension to a longitudinal axis of the injector element, wherein the inclination of the long sides of the slots with regard to their radial extension to a longitudinal axis is greater than 0° and smaller than 60°.
By inclining the slots of the flow splitter the contact area between the two propellants can be increased, resulting in an increased combustion efficiency. The increased combustion efficiency leads to an increased engine power output. An injector element of such kind may be used in small rocket drives where the total amount of injector elements is limited due to limited space. Such rocket drives having conventional injector elements suffer from reduced combustion efficiency.

Such loss in power output can be lowered or even be compensated when using injector elements of the suggested design.

According to a further embodiment of the invention, the long sides of the slots extend in a plane which is perpendicular to the longitudinal axis of the injector element.

According to a further embodiment of the invention, side walls of the slots are arranged such that they are lying in respective planes being parallel to the longitudinal axis of the injector element. Hence, no turbulence swirl affects the propellant when flowing through the flow channel.

Alternatively, the side walls of the slots may be arranged such that they are lying in respective planes being not parallel to the longitudinal axis of the injector element. As a result, the propellant is swirled when flowing through the flow channel.

According to a further embodiment of the invention, the slots are substantially in the form of a rectangular. For the sake of clarity, a cross-section through a respective slot in a plane being perpendicular to the longitudinal axis results in the rectangular shape. However, the slots may have other shapes deviating from a rectangle, too.

According to a further embodiment of the invention, the slots are uniformly distributed over the circumference of the central body.

According to a second aspect of the invention, a rocket drive comprises at least one injector element according to one of the embodiments set out above. A rocket engine having at least one injector element according to the invention has an increased combustion efficiency.

More details and advantages of the invention will be explained by reference to the accompanying figures.
- Fig. 1: shows a perspective view of an injector element according to the invention.
- Fig. 2: shows a view of a flow splitter of the injector element of Fig. 1.
- Fig. 3: shows a view of conventional flow splitter of a known injector element.

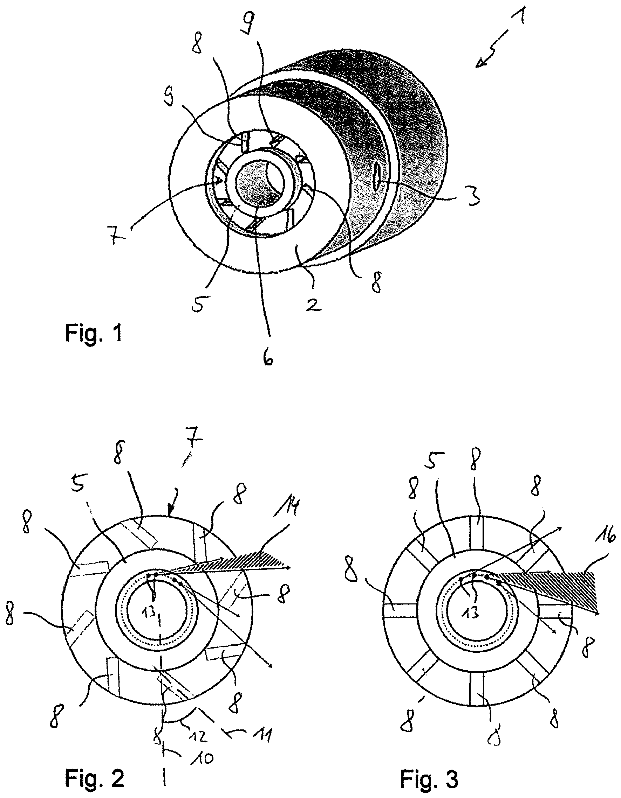

The injector element 1 illustrated in Fig. 1 is part of an injector head of a rocket engine, wherein several hundred of such injector elements 1 may be arranged in the head, depending on the size of the engine. Every individual injector element 1 consists of two main parts, namely, a central body 5 and the sleeve 2.

The central body 5 contains on the inside an oxidant flow channel (not shown), which is divided into a plurality of sections with different functions. On its outside, it carries the geometric structure limiting the flow cross section of the fuel. An oxidant flows from a distribution space arranged above the injector elements 1 via a throttle (not shown) and into the oxidant flow channel. The throttle is used to set the desired injector pressure drop, which is needed for uncoupling the vibrations between the combustion chamber and the delivery system. The throttle is connected to the central body 5 via a not shown weld seam. A rotary movement, which is necessary for the preparation of the oxidant, is superimposed to the axial flow movement of the liquid oxidant, for example, by a twisting insert (not shown) arranged below, i.e. downstream, the throttle. Via the cross section contraction arranged downstream of the twisting insert, the oxidant reaches the cylindrical outlet, and its sharp-edged opening 6 forms the inlet into the combustion chamber. Due to the twist still present in the opening 6, the jet of liquid oxidant expands directly after the inlet into the combustion chamber and disintegrates into individual drops. The angle of the oxidant spray cone formed and the hollow conical or solid conical distribution of the oxidant over the cone cross section depend on the shape of the twisting insert and the geometry of the oxidant flow channel.

The fuel flow channel is formed by the sleeve 2 concentrically surrounding the central body 5 in conjunction with slots 8 arranged on the circumference of the central body 5. The propellant flows from a distribution space being different to the distribution space of the oxidant via radial throttle openings 3 and into the annular gap (not shown). The fuel subsequently flows through the axially arranged slots 8 of the flow divider 7, preferably made in one piece with the central body 5, as a result of which it is divided into a plurality of individual jets of rectangular cross section.

Downstream of the rectangular slots 8, the jets of propellant either flow again through an annular gap, or they enter the combustion chamber directly via the sharp-edged (e.g. 90° angled edge 9) opening of the sleeve 2. The individual jets of fuel meet the oxidant spray cone in the combustion chamber and partially penetrate same.

For safety reasons, hypergolic propellants must be hermetically separated from one another before reaching the predetermined reaction zone. The central body 5 and the sleeve 2 are therefore connected to one another in a liquid-tight and airtight manner via different weld seams (not shown).

To increase the combustion efficiency, long sides of the slots 8 are inclined with regard to their radial extension to a longitudinal axis of the injector element 1. The longitudinal axis runs in the direction of the central body and conforms with the longitudinal axis of the central body, respectively. In the example of Fig. 1 in total eight circumferential distributed slots 8 are provided. However, the number of slots 8 may be chosen different from that. The inclination leading to a best combustion efficiency may be determined by calculation or experiments.

By inclining the slots 8 of the flow splitter 7, the contact area between the oxidant and the propellant can be increased, resulting in an increased combustion efficiency. This is outlined by a comparison of a flow splitter 7 according to the invention (Fig. 2) and a conventional flow splitter of a known injector element (Fig. 3).

Referring to Fig. 2, the inclination (angle 12) between a radial axis 10 and an inclined axis 11 is illustrated for one of the slots 8. The axis 10 and the axis 11 lie in a plane being perpendicular to the longitudinal axis of the injector element. With regard to an associated radial extension of each slot (i.e. its associated radial axis 10), the inclination (i.e. the angle 12) is greater than 0° and smaller than 60°. The inclination may be chosen according to the number of slots 8 surrounding the central body. Contrary to the inclined slots 8 of the injector element 1 according to the invention, the slots 8 of the conventional injector element extend in a radial direction to the longitudinal axis of the injector element (Fig. 3).

In the conventional injector element of Fig. 3 having radial extending slots 8 a comparable big area (depicted with a hatching and reference numeral 16) of the oxidant leaving the central body through a plurality of outlets 13 and extending between two adjacent slots 8 does not come into contact with propellant flowing out from the slots. Hence, the propellant remains unburnt locally. Contrary, in an injector element 1 according to the invention (Fig. 2) having inclined slots 8, this area (again depicted with a hatching and reference numeral 14) is reduced significantly. As a result, more propellant is brought to reaction locally.

In both, Figs. 2 and 3, the longitudinal axis of the injector element extends perpendicular to the plane of projection.

The increased combustion efficiency leads to an increased engine power output. An injector element of such kind may be used in small rocket drives where the total amount of injector elements is limited due to limited space. Such rocket drives having conventional injector elements suffer from reduced combustion efficiency. The loss in power output can be lowered or even be compensated when using injector elements of the suggested design.

Experimental series, which were first carried out with individual elements and then with multi-element injector heads, showed that this manner of preparation and mixing leads to a highly stable combustion with high efficiency in the case of the hypergolic propellants discussed herein.

While a specific embodiment of the invention has been shown and described in detail to illustrate the application of the principles of the invention, it will be understood that the invention may be embodied otherwise without departing from such principles.

### REFERENCE NUMERALS

- 1: injector element
- 2: sleeve
- 3: radial throttle openings
- 5: central body
- 6: sharp edged opening
- 7: flow divider
- 8: slot
- 9: edge
- 10: radial axis
- 11: inclined axis
- 12: angle
- 13: outlet
- 14: area
- 16: area

## Claims

1. An injector element (1), in particular for a rocket drive, for operation with a first and a second propellant, comprising:
- a central body (5) with a flow channel with an outlet, the central body (5) configured to generate a conical drop distribution at the outlet forming a fuel cone, the first propellant being provided in the central body (5);
- a sleeve (2) concentrically surrounding the central body (5) to form an annular flow channel for the second propellant;
- a flow splitter (7) arranged between the central body (5) and the sleeve (2) for splitting the second propellant into a plurality of individual flows, the flow splitter (7) including a given number of passage channels which are distributed around the central body (5), each of the passage channels for generating a fine propellant jet; wherein the passage channels are slots (8), wherein the long sides of the slots (8) are inclined with regard to their associated radial axis (10);
**characterized in that**
the inclination is greater than 0° and smaller than 60°.

2. The injector element according to claim 1, wherein long sides of the slots (8) extend in a plane which is perpendicular to a longitudinal axis of the injector element (1).

3. The injector element according to claim 1 or 2, wherein side walls of the slots (8) are arranged such that they are lying in respective planes being parallel to the longitudinal axis of the injector element (1).

4. The injector element according to claim 1 or 2, wherein the side walls of the slots (8) are arranged such that they are lying in respective planes being not parallel to the longitudinal axis of the injector element (1).

5. The injector element according to one of the preceding claims, wherein the slots (8) are substantially in the form of a rectangle.

6. The injector element according to one of the preceding claims, wherein the slots (8) are uniformly distributed over the circumference of the central body (5).

7. A rocket drive comprising at least one injector element (1) according to one of the preceding claims.

## Patentansprüche

1. Injektorelement (1), insbesondere für einen Raketenantrieb, zum Betrieb mit einem ersten und einem zweiten Treibstoff, umfassend:
- einen zentralen Körper (5) mit einem Strömungskanal mit einem Auslass, wobei der zentrale Körper (5) dazu konfiguriert ist, eine konische Tropfenverteilung am Auslass zu erzeugen, wodurch ein Kraftstoffkegel gebildet wird, wobei der erste Treibstoff in dem zentralen Körper (5) bereitgestellt wird;
- eine Hülse (2), die den zentralen Körper (5) konzentrisch umschließt, um einen ringförmigen Strömungskanal für den zweiten Treibstoff zu bilden;
- einen Strömungsteiler (7), der zwischen dem zentralen Körper (5) und der Hülse (2) angeordnet ist, zum Aufteilen des zweiten Treibstoffs in mehrere einzelne Strömungen, wobei der Strömungsteiler (7) eine gegebene Anzahl von Durchlaufkanälen umfasst, die um den zentralen Körper (5) herum verteilt sind, wobei jeder der Durchlaufkanäle zum Erzeugen eines feinen Treibstoffstrahls ist; wobei die Durchlaufkanäle Schlitze (8) sind, wobei die langen Seiten der Schlitze (8) bezüglich ihrer assoziierten radialen Achse (10) geneigt sind;
**dadurch gekennzeichnet, dass**
die Neigung größer als 0° und kleiner als 60° ist.

2. Injektorelement nach Anspruch 1, wobei lange Seiten der Schlitze (8) sich in einer Ebene erstrecken, die senkrecht zu einer Längsachse des Injektorelements (1) ist.

3. Injektorelement nach Anspruch 1 oder 2, wobei Seitenwände der Schlitze (8) derart angeordnet sind, dass sie in jeweiligen Ebenen liegen, die parallel zu der Längsachse des Injektorelements (1) sind.

4. Injektorelement nach Anspruch 1 oder 2, wobei die Seitenwände der Schlitze (8) derart angeordnet sind, dass sie in jeweiligen Ebenen liegen, die nicht parallel zu der Längsachse des Injektorelements (1) sind.

5. Injektorelement nach einem der vorhergehenden Ansprüche, wobei die Schlitze (8) im Wesentlichen in der Form eines Rechtecks sind.

6. Injektorelement nach einem der vorhergehenden Ansprüche, wobei die Schlitze (8) gleichmäßig über den Umfang des zentralen Körpers (5) verteilt sind.

7. Raketenantrieb, der mindestens ein Injektorelement (1) nach einem der vorhergehenden Ansprüche umfasst.

## Revendications

1. Élément d'injecteur (1), en particulier pour un propulseur de fusée, pour fonctionner avec un premier et un second propergol, comprenant :
- un corps central (5) avec un canal d'écoulement avec une sortie, le corps central (5) étant configuré pour générer une distribution de gouttelettes conique au niveau de la sortie formant un cône de carburant, le premier propergol étant disposé dans le corps central (5) ;
- une chemise (2) entourant de manière concentrique le corps central (5) pour former un canal d'écoulement annulaire pour le second propergol ;
- un diviseur d'écoulement (7) disposé entre le corps central (5) et la chemise (2) pour diviser le second propergol en une pluralité d'écoulements individuels, le diviseur d'écoulement (7) comprenant un nombre donné de canaux de passage qui sont répartis autour du corps central (5), chacun des canaux de passage servant à générer un jet fin de propergol ; les canaux de passage étant des fentes (8), les côtés longs des fentes (8) étant inclinés par rapport à leur axe radial associé (10) ; **caractérisé par le fait que** l'inclinaison est supérieure à 0° et inférieure à 60°.

2. Élément d'injecteur selon la revendication 1, dans lequel des côtés longs des fentes (8) s'étendent dans un plan qui est perpendiculaire à un axe longitudinal de l'élément d'injecteur (1).

3. Élément d'injecteur selon la revendication 1 ou 2, dans lequel des parois latérales des fentes (8) sont disposées de telle sorte qu'elles se trouvent dans des plans respectifs qui sont parallèles à l'axe longitudinal de l'élément d'injecteur (1).

4. Élément d'injecteur selon la revendication 1 ou 2, dans lequel les parois latérales des fentes (8) sont disposées de telle sorte qu'elles se trouvent dans des plans respectifs qui ne sont pas parallèles à l'axe longitudinal de l'élément d'injecteur (1).

5. Élément d'injecteur selon l'une des revendications précédentes, dans lequel les fentes (8) sont sensiblement sous la forme d'un rectangle.

6. Élément d'injecteur selon l'une des revendications précédentes, dans lequel les fentes (8) sont réparties de manière uniforme sur la circonférence du corps central (5).

7. Propulseur de fusée comprenant au moins un élément d'injecteur (1) selon l'une des revendications précédentes.
